# EUROPEAN PATENT SPECIFICATION

(11) **EP 4 610 095 B1**
(45) Date of publication and mention of the grant of the patent: **30.09.2026**
(21) Application number: 25159565.8
(22) Date of filing: 24.02.2025
(51) Int. Cl.: B60L 53/20, H01F 27/06, H01F 27/36, H01F 27/02

(54) **CHARGING MODULE, ON-BOARD POWER SUPPLY, AND VEHICLE**
LADEMODUL, BORDSTROMVERSORGUNG UND FAHRZEUG
MODULE DE CHARGE, ALIMENTATION ÉLECTRIQUE EMBARQUÉE ET VÉHICULE

(30) Priority: 27.02.2024 CN 202420364603 U
(43) Date of publication of application: 03.09.2025
(73) Proprietor: BYD Company Limited, Shenzhen, Guangdong 518118 (CN)
(72) Inventor: Dong, Weimin, Shenzhen, 518118 (CN); LONG, Baochuan, Shenzhen, 518118 (CN)
(74) Representative: Mathys & Squire

(56) References cited:
- CN-A- 110 943 508
- CN-U- 216 128 156
- DE-A1- 102017 202 592
- US-A1- 2016 086 711
- US-A1- 2022 165 471
- US-B1- 10 892 083

## Description

### FIELD

The present disclosure relates to the technical field of automobile devices, and more specifically, to a charging module, an on-board power supply, and a vehicle.

### BACKGROUND

Currently, a vehicle includes an on-board power supply, and a storage battery of the vehicle may be charged through the on-board power supply. The on-board power supply includes a first direct current (DC) transformer, a second DC transformer, and a power factor correction (PFC) inductor. In the related art, the first DC transformer, the second DC transformer, and the PFC inductor need to be mounted separately during assembling of the on-board power supply, resulting in complicated procedures. In addition, since the first DC transformer, the second DC transformer, and the PFC inductor have relatively large sizes, an additional fixation structure is further needed to fix each of the first DC transformer, the second DC transformer, and the PFC inductor to the on-board power supply, which results in excessive components and high costs, is also unfavorable for miniaturization of the on-board power supply, and then affects an increase in a space utilization rate of the vehicle. CN216128156U relates to an on-board charger and an electric vehicle. CN110943508A relates to a two-way on-board charger and new energy vehicles. DE102017202592A1 relates to control electronics for controlling a load in a vehicle, having a printed circuit board, a rod core throttle and a magnetic flux guide element. US10892083B1 relates to a toroidal transformer assembly of an electronic component module assembly including a transformer mounting plate receptive of the toroidal transformer. US2022/165471A1 relates to a printed circuit board and a method for manufacturing a circuit card assembly.

### SUMMARY

Aspects of the invention are as set out in the independent claims and optional features are set out in the dependent claims. Implementations of the present disclosure provide a charging module, an on-board power supply, and a vehicle.

The charging module in the implementations of the present disclosure includes a substrate, a first transformer, a power factor correction (PFC) inductor, and a second transformer. The first transformer, the PFC inductor, and the second transformer are fixed to the substrate.

In this way, the first transformer, the PFC inductor, and the second transformer are fixedly connected with the substrate. Therefore, the first transformer, the PFC inductor, and the second transformer independent of each other can be integrated into a device, which can reduce an area occupied by the first transformer, the PFC inductor, and the second transformer of the charging module, to facilitate miniaturization of the on-board power supply, thereby increasing a space utilization rate of the vehicle. In addition, the first transformer, the PFC inductor, and the second transformer are integrated into a device. In this way, heat generated by the first transformer, the PFC inductor, and the second transformer can be collected and then processed, thereby improving a thermal management capability. Moreover, only one component, that is, the substrate, is needed to fix the first transformer, the PFC inductor, and the second transformer without needing an additional fixation structure. Therefore, assembly is relatively simple, and development costs can be reduced.

In some implementations, limiting grooves are formed on the substrate. The first transformer, the PFC inductor, and the second transformer are arranged in the limiting grooves.

In this way, the limiting grooves are formed on the substrate, and the first transformer, the PFC inductor, and the second transformer are arranged in the limiting grooves. Therefore, the first transformer, the PFC inductor, and the second transformer can be conveniently fixed to the substrate. Moreover, the formed limiting grooves can increase an area of dispensed adhesive, thereby improving strength of fixation.

In some implementations, the first transformer, the PFC inductor, and the second transformer are fixed to the substrate by dispensing an adhesive.

In this way, the first transformer, the PFC inductor, and the second transformer are fixed to the substrate by dispensing the adhesive without needing to prepare additional fixation structures such as a screw and screw holes, thereby reducing complicated procedures. In addition, the fixation manner of dispensing the adhesive facilitates assembly and disassembly.

According to the present invention, the first transformer, the PFC inductor, and the second transformer each include first pins. Through holes are formed on the substrate. The charging module further includes second pins. The second pins are arranged on a side of the substrate opposite to the first transformer, the PFC inductor, and the second transformer. At least a portion of the first pins extends through the through holes and is connected to the second pins.

In this way, the through holes are formed on the substrate. Therefore, the first pins included in the first transformer, the PFC inductor, and the second transformer do not need to be connected to the second pins from an outer side of the substrate, so that the first pins can be connected to the second pins through the through holes, which simplifies a structure of the charging module while saving costs.

In some implementations, the charging module further includes a pin adapter board. The pin adapter board is arranged on the side of the substrate opposite to the first transformer, the PFC inductor, and the second transformer. The pin adapter board is connected with at least a portion of the second pins. At least a portion of the first pins is connected to the pin adapter board through the through holes.

In this way, the first pins are connected to the pin adapter board through the through holes, and the second pins are connected to the pin adapter board, so that the first transformer, the PFC inductor, and the second transformer can be connected to an external circuit.

In some implementations, the charging module includes a magnetic sheet. The substrate is arranged between the magnetic sheet and the first transformer, the PFC inductor, and the second transformer. The first transformer is thermally coupled to the magnetic sheet through the pin adapter board.

In this way, the magnetic sheet included in the charging module is fixed to the substrate, which can effectively shield magnetic leakage generated by coils of the first transformer, the PFC inductor, and the second transformer. In addition, the magnetic sheet has a high electrical resistivity, which may reduce an eddy current loss of the magnetic sheet, and reduce an amount of generated heat.

In some implementations, a fixing slot is formed on the substrate. The magnetic sheet is located in the fixing slot.

In this way, the fixing slot is formed on the substrate, which facilitates positioning of the magnetic sheet on the substrate, to conveniently mount the magnetic sheet.

In some implementations, the charging module includes a thermally conductive member. The thermally conductive member is arranged between the substrate and the magnetic sheet.

In this way, the thermally conductive member is arranged between the substrate and the magnetic sheet, which can accelerate a loss of the heat generated by the first transformer, the PFC inductor, and the second transformer, and can serve as a buffer.

In some implementations, the first transformer, the PFC inductor, and the second transformer are fixed to a same side of the substrate. The charging module includes a housing. An accommodating cavity is formed on the housing. When the substrate is connected to the housing, the first transformer, the PFC inductor, and the second transformer are placed in the accommodating cavity.

In this way, the first transformer, the PFC inductor, and the second transformer are arranged inside the housing, which can prevent the first transformer, the PFC inductor, and the second transformer from being damaged as a result of an external impact, and provide a protective effect. In addition, a water channel may be provided in the accommodating cavity, so that heat dissipation is performed on the first transformer, the PFC inductor, and the second transformer through water cooling.

The on-board power supply in the implementations of the present disclosure includes the charging module described in the above implementations.

The vehicle according to in the implementations of the present disclosure includes the on-board power supply described in the above implementations.

Parts of additional aspects and advantages of the implementations of the present disclosure are to be given in the following description. The parts become apparent from the following description, or are to be learned by practice of the implementations of the present disclosure.

### BRIEF DESCRIPTION OF THE DRAWINGS

The foregoing and/or additional aspects and advantages of the present disclosure will become apparent and comprehensible from the description of the implementations made with reference to the following accompanying drawings.
FIG. 1 is a schematic planar view of a charging module according to some implementations of the present disclosure;
FIG. 2 is a schematic exploded view of a charging module according to some implementations of the present disclosure;

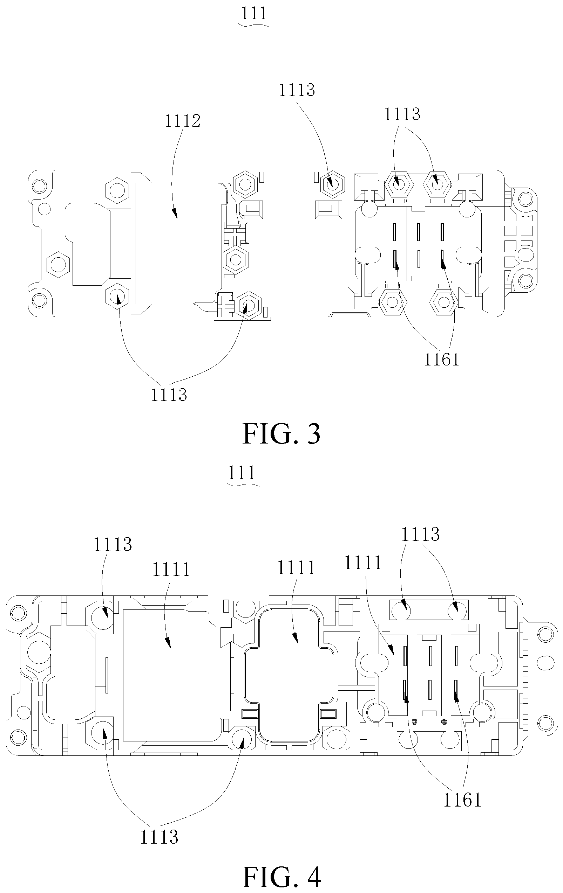

FIG. 3 is a top view of a substrate according to some implementations of the present disclosure;
FIG. 4 is a bottom view of a substrate according to some implementations of the present disclosure;
FIG. 5 is a schematic diagram of a circuit of an on-board power supply some embodiments of the present disclosure;
FIG. 6 is a three-dimensional schematic structural diagram of a charging module according to some implementations of the present disclosure; and
FIG. 7 is a schematic planar view of a vehicle according to some implementations of the present disclosure.

In the drawings:
100. Vehicle; 10. On-board power supply; 11. Charging module; 111. Substrate; 1111. Limiting groove; 1112. Fixing slot; 1113. Through hole; 112. First transformer; 113. Power factor correction (PFC) inductor; 114. Second transformer; 1141. Secondary copper sheet; 115. First pin; 116. Pin adapter board; 1161. Positioning hole; 117. Second pin; 118. Magnetic sheet; 119. Housing; and 1191. Accommodating cavity.

### DETAILED DESCRIPTION

Implementations of the present disclosure are described in detail below, and examples of the implementations are shown in accompany drawings. Same or similar elements or elements having same or similar functions are denoted by the same or similar reference numerals throughout the description. The implementations described below with reference to the accompanying drawings are exemplary, are only used for explaining the implementations of the present disclosure, and cannot be construed as limitations on the implementations of the present disclosure.

In the descriptions of the present disclosure, it should be understood that orientation or position relationships indicated by terms such as "thickness", "up", "top", "bottom", "inside", and "outside" are based on orientation or position relationships shown in the accompanying drawings, and are merely for convenience and simplification of the description of the present disclosure, rather than indicating or implying that the mentioned apparatus or element needs to have a particular orientation or be constructed and operated in a particular orientation. Therefore, such terms cannot be construed as limitations on the present disclosure. In addition, terms "first" and "second" are merely used for description, and cannot be construed as indicating or implying relative importance or implicitly indicating a quantity of indicated technical features. Therefore, features defined with "first" and "second" may explicitly or implicitly include one or more of the features. In the description of the present disclosure, "multiple" means two or more, unless otherwise explicitly and specifically defined.

In the description of the present disclosure, it should be noted that, unless otherwise explicitly specified or defined, terms "mount", "connect", and "connection" are to be understood in a broad sense. In an example, the connection may be a fixed connection, a detachable connection, or an integral connection, or may be a mechanical connection, an electrical connection, or mutual communication, or may be a direct connection, an indirect connection through an intermediary, internal communication between two elements, or an interaction relationship between two elements.

In the implementations of the present disclosure, a first feature being "over" or "below" a second feature may include that the first feature and the second feature are in direct contact, or may include that the first feature and the second feature are not in direct contact but are in contact through another feature therebetween. In addition, that the first feature is "above", "over", or "on" the second feature includes that the first feature is directly or obliquely above the second feature, or merely means that the first feature is at a higher horizontal position than the second feature. The first feature being "below", "under", or "beneath" the second feature includes that the first feature is directly or obliquely below the second feature, or merely means that the first feature is at a lower horizontal position than the second feature.

Currently, during charging of a battery of a new energy vehicle, two direct current (DC) transformers and a power factor correction (PFC) inductor of an on-board power supply need to convert a high-voltage alternating current of a charging pile into a low-voltage DC, and the low-voltage DC is stored in a storage battery.

During mounting of a first DC transformer, a second DC transformer, and the PFC inductor, since the first DC transformer, the second DC transformer, and the PFC inductor have relatively large sizes, an additional fixation structure needs to be adopted to fix each of the first DC transformer, the second DC transformer, and the PFC inductor to the on-board power supply, which results in excessive components and high costs, is also unfavorable for miniaturization of the on-board power supply, and then affects an increase in a space utilization rate of the vehicle.

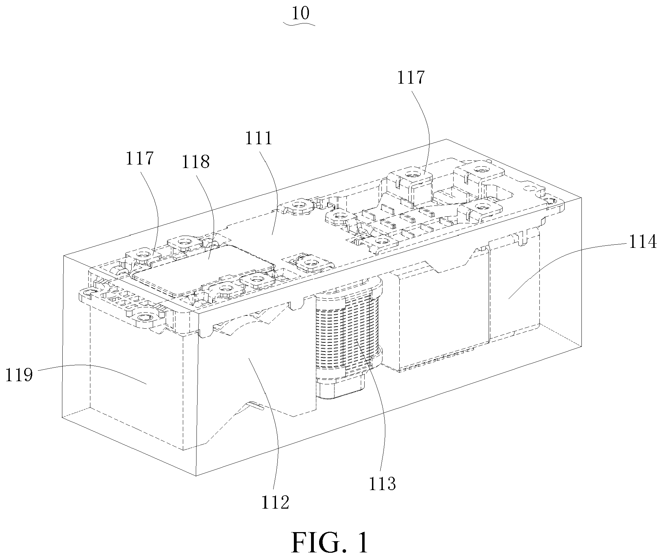

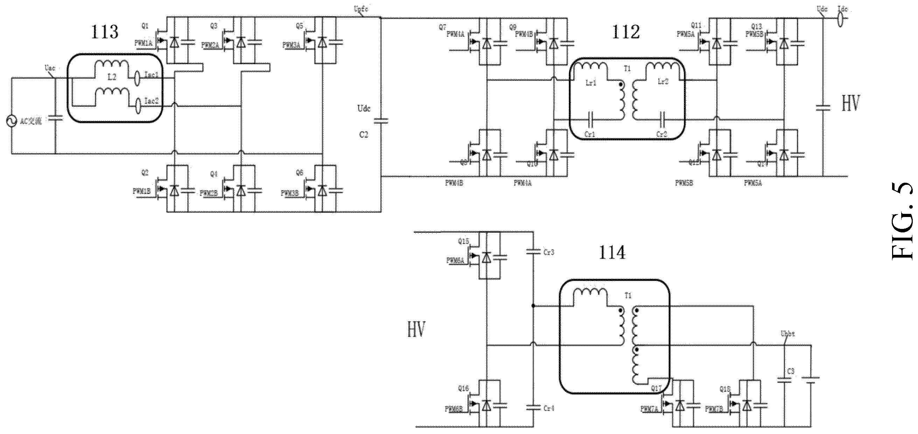

Therefore, referring to FIG. 1 and FIG. 5, a charging module 11 in the implementations of the present disclosure includes a substrate 111, a first transformer 112, a PFC inductor 113, and a second transformer 114. The first transformer 112, the PFC inductor 113, and the second transformer 114 are fixed to the substrate 111.

In this way, the first transformer 112, the PFC inductor 113, and the second transformer 114 are fixedly connected with the substrate 111. Therefore, the first transformer 112, the PFC inductor 113, and the second transformer 114 independent of each other can be integrated into a device, which can reduce an area occupied by the first transformer 112, the PFC inductor 113, and the second transformer 114 of the charging module 11, to facilitate miniaturization of the on-board power supply 10, thereby increasing a space utilization rate of the vehicle 100. In addition, the first transformer, the PFC inductor, and the second transformer are integrated into a device. In this way, heat generated by the first transformer, the PFC inductor, and the second transformer can be collected and then processed, thereby improving a thermal management capability. Moreover, only one component, that is, the substrate 111, is needed to fix the first transformer, the PFC inductor, and the second transformer without needing an additional fixation structure. Therefore, assembly is relatively simple, and development costs can be reduced.

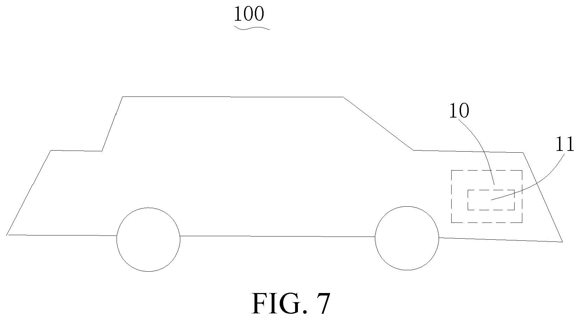

The charging module 11 included in the on-board power supply 10 of the vehicle 100 includes the first transformer 112, the PFC inductor 113, and the second transformer 114. The on-board power supply 10 of the vehicle 100 can input a received external current signal into the charging module 11, convert the current signal in the charging module 11, and then transmit the converted current signal to a storage battery of the vehicle 100 for charging. The first transformer 112 and the second transformer 114 may be DC transformers. As shown in FIG. 7, in a case that a vehicle 100 is charged, when a high-voltage alternating current of a charging pile flows through the PFC inductor 113, the PFC inductor 113 can adjust a waveform and a harmonic of a low voltage existing in the high-voltage alternating current, so that a waveform of the high-voltage alternating current is close to a sine wave. The high-voltage alternating current flows through the PFC inductor, and then forms a DC. The DC is converted into a high-voltage DC through a first transformer 112 and is stored in a power battery, and the DC is converted into a low-voltage DC through a second transformer 114 and is stored in a storage battery.

Specifically, the charging module 11 of the vehicle 100 further includes a substrate 111. A shape of the substrate 111 needs to be adapted to shapes of the first transformer 112, the PFC inductor 113, and the second transformer 114, so that the substrate 111 can fix the first transformer 112, the PFC inductor 113, and the second transformer 114 without needing an additional fixation structure. The substrate 111 may be made through a manufacturing process of injection molding, which can improve production efficiency of the substrate 111, reduce costs of producing the substrate 111, and stabilize production quality of the substrate 111.

Limiting grooves 1111 are further formed on the substrate 111. Sizes and shapes of the limiting grooves 1111 respectively correspond to the first transformer 112, the PFC inductor 113, and the second transformer 114. At least a portion of the first transformer 112, the PFC inductor 113, and the second transformer 114 extends into each of the limiting grooves 1111, the first transformer 112, the PFC inductor 113, and the second transformer 114 can be quickly fixed to the substrate 111. Moreover, the limiting grooves 1111 are provided on the substrate 111, which can increase a contact area between the first transformer 112, the PFC inductor 113, and the second transformer 114 and the substrate 111, thereby improving strength of the fixation.

The first transformer 112, the PFC inductor 113, and the second transformer 114 may be fixed to the limiting groove 1111 by dispensing an adhesive. To be specific, after the first transformer 112, the PFC inductor 113, and the second transformer 114 extend into the limiting grooves 1111, a dispenser injects the adhesive into the limiting grooves 1111, so that the first transformer 112, the PFC inductor 113, and the second transformer 114 can be fixed to the substrate 111 after the adhesive is cooled. Therefore, the first transformer 112, the PFC inductor 113, and the second transformer 114 are fixed to the substrate 111 by dispensing the adhesive without needing to prepare additional fixation structures such as a screw and screw holes, thereby reducing complicated procedures. In addition, the fixation manner of dispensing facilitates assembly and disassembly of the first transformer 112, the PFC inductor 113, and the second transformer 114 with the substrate 111.

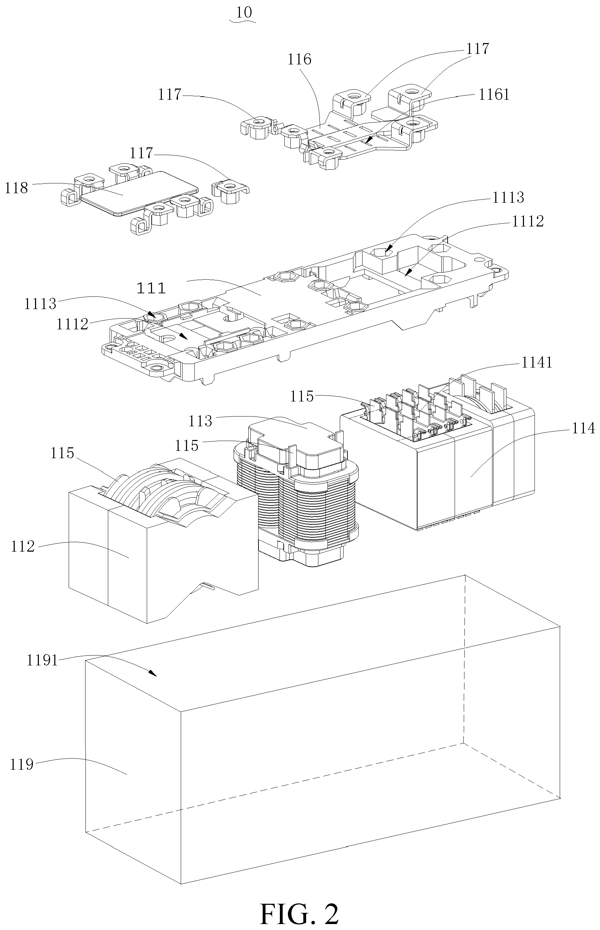

Referring to FIG. 2, in some implementations, the first transformer 112, the PFC inductor 113, and the second transformer 114 each include first pins 115. Through holes 1113 are formed on the substrate 111. The charging module 11 further includes second pins 117. The second pins 117 are arranged on a side of the substrate 111 opposite to the first transformer 112, the PFC inductor 113, and the second transformer 114. At least a portion of the first pins 115 extends through the through holes 1113 and is connected to the second pins 117.

In this way, the through holes 1113 are formed on the substrate 111. Therefore, the first pins 115 included in the first transformer 112, the PFC inductor 113, and the second transformer 114 do not need to be connected to the second pins 117 from an outer side of the substrate 111, so that the first pins 115 can be connected to the second pins 117 through the through holes 1113, which simplifies a structure of the charging module 11 while saving costs.

Specifically, for the charging module 11 to communicate with an external circuit, pins need to be arranged on the charging module 11 to serve as a connecting bridge. The first pins 115 are arranged on each of the first transformer 112, the PFC inductor 113, and the second transformer 114. The first pins 115 can serve as interfaces for connection of circuits of the first transformer 112, the PFC inductor 113, and the second transformer 114 with the external circuit, and quantities of first pins 115 of the first transformer 112, the PFC inductor 113, and the second transformer 114 are different. For example, a quantity of first pins 115 of the first transformer 112 may be 4, a quantity of first pins 115 of the second transformer 114 may be 6, and a quantity of first pins 115 of the PFC inductor 113 may be two.

Referring to FIG. 2, in some implementations, the charging module 11 further includes a pin adapter board 116. The pin adapter board 116 is arranged on the side of the substrate 111 opposite to the first transformer 112, the PFC inductor 113, and the second transformer 114. The pin adapter board 116 is connected with at least a portion of the second pins 117. At least a portion of the first pins 115 is connected to the pin adapter board 116 through the through holes 1113.

In this way, the first pins 115 are connected to the pin adapter board 116 through the through holes 1113, and the second pins 117 are connected to the pin adapter board 116, so that the first transformer 112, the PFC inductor 113, and the second transformer 114 can be connected to the external circuit.

The charging module 11 further includes the pin adapter board 116. A position of the pin adapter board 116 is arranged on the side of the substrate 111 opposite to the first transformer 112, the PFC inductor 113, and the second transformer 114, and corresponds to positions of the first pins 115 of the second transformer 114. The through holes 1113 are further formed on the substrate 111. Positioning holes 1161 are formed on the pin adapter board 116. A position of each of the through holes 1113 is arranged between the pin adapter board 116 and the first pins 115, so that the first pins 115 extend through the through holes 1113 and can be fixedly connected to the positioning holes 1161 on the pin adapter board 116. The second pins 117 are stably connected with the pin adapter board 116, so that the pin adapter board 116 can stably connect the first transformer 112, the PFC inductor 113, and the second transformer 114 to the external circuit.

Optionally, the second transformer 114 includes secondary copper sheets. The positioning holes 1161 are formed on the pin adapter board 116 corresponding to the second transformer 114. Shapes and sizes of the positioning holes 1161 match shapes and sizes of secondary copper sheets 1141. For example, the shape of each of the secondary copper sheets 1141 is a rectangle, and the shape of each of the positioning holes 1161 is also a rectangle. Therefore, the secondary copper sheets 1141 can successively extend through the through holes 1113 on the substrate 111 and the positioning holes 1161 on the pin adapter board 116.

Referring to FIG. 2 and FIG. 5, in some implementations, the charging module 11 includes a magnetic sheet 118. The substrate 111 is arranged between the magnetic sheet 118 and the first transformer 112, the PFC inductor 113, and the second transformer 114. The first transformer 112 is thermally coupled to the magnetic sheet 118 through the pin adapter board 116.

In this way, the magnetic sheet 118 included in the charging module 11 is fixed to the substrate 111, which can effectively shield magnetic leakage generated by coils of the first transformer, the PFC inductor, and the second transformer. In addition, the magnetic sheet 118 has a high electrical resistivity, which may reduce an eddy current loss of the magnetic sheet 118, and reduce an amount of generated heat.

Specifically, the charging module 11 further includes the magnetic sheet 118. The magnetic sheet 118 is made of a magnetic material, so that the magnetic sheet 118 has high magnetic permeability and the high electrical resistivity.

A fixing slot 1112 is further formed on the side of the substrate 111 opposite to the first transformer 112, the PFC inductor 113, and the second transformer 114. A shape and a size of the fixing slot 1112 are adapted to a shape and a size of the magnetic sheet 118, so that the magnetic sheet 118 can extend into the fixing slot 1112 for fixation. The fixing slot 1112 is formed on the substrate 111, to facilitate positioning of the magnetic sheet 118 on the substrate 111, thereby quickly mounting the magnetic sheet 118.

Optionally, the pin adapter board 116 located above the first transformer 112 may be arranged around the magnetic sheet 118, so that the heat generated by the first transformer 112 may be transferred to the magnetic sheet 118 through heat conduction, and heat generated by a DC can be dissipated through the magnetic sheet 118.

In some implementations, the charging module 11 includes a thermally conductive member. The thermally conductive member is arranged between the substrate 111 and the magnetic sheet 118.

In this way, the thermally conductive member is arranged between the substrate 111 and the magnetic sheet 118, which can accelerate a loss of the heat generated by the first transformer 112, the PFC inductor 113, and the second transformer 114.

Specifically, the charging module 11 further includes the thermally conductive member. The thermally conductive member may be organic thermally conductive silicone grease, inorganic thermally conductive silicone grease, composite thermally conductive silicone grease, a thermally conductive pad, or the like. The thermally conductive member is arranged on the substrate 111 below the magnetic sheet 118, so that when the heat generated by the first transformer 112, the PFC inductor 113, and the second transformer 114 is transferred to the substrate 111, the heat loss can be accelerated through the thermally conductive member.

Referring to FIG. 2 again, in some implementations, the first transformer 112, the PFC inductor 113, and the second transformer 114 are fixed to a same side of the substrate 111. The charging module 11 includes a housing 119. An accommodating cavity 1191 is formed on the housing 119. When the substrate 111 is connected with the housing 119, the first transformer 112, the PFC inductor 113, and the second transformer 114 are placed in the accommodating cavity 1191.

In this way, the first transformer 112, the PFC inductor 113, and the second transformer 114 are arranged inside the housing 119, which can prevent the first transformer 112, the PFC inductor 113, and the second transformer 114 from being damaged as a result of an external impact, and provide a protective effect. In addition, a water channel may be provided in the accommodating cavity, so that heat dissipation is performed on the first transformer 112, the PFC inductor 113, and the second transformer 114 through water cooling.

Specifically, the charging module 11 further includes the housing 119. The accommodating cavity 1191 can be formed on the housing 119. A size and a shape of the housing 119 are adapted to sizes and shapes of the first transformer 112, the PFC inductor 113, and the second transformer 114, so that the first transformer 112, the PFC inductor 113, and the second transformer 114 can be arranged in the accommodating cavity 1191.

An opening of the housing 119 can be connected to a side of the substrate 111 by a bolt, welding, or riveting, so that the substrate 111 and the housing 119 can surround the first transformer 112, the PFC inductor 113, and the second transformer 114, and then can protect the first transformer 112, the PFC inductor 113, and the second transformer 114 from damage when the vehicle 100 is subjected to a jolt or an impact.

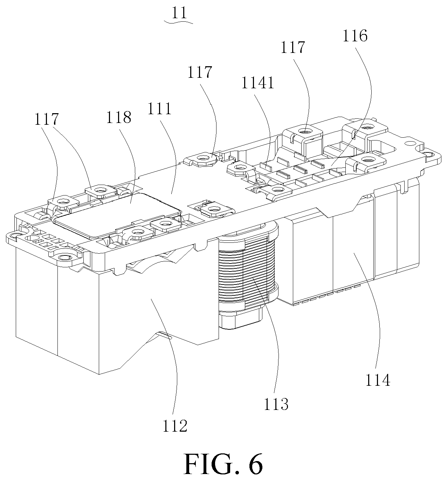

Referring to FIG. 6, a vehicle 100 in this implementation of the present disclosure includes the charging module 11 in the above implementations.

Specifically, in the vehicle 100 according to this embodiment of the present disclosure, the charging module 11 in the above embodiments can integrate the three independent devices, that is, the first transformer 112, the PFC inductor 113, and the second transformer 114 into a device through the substrate 111. Therefore, an additional fixation structure is not needed to fix the first transformer 112, the PFC inductor 113, and the second transformer 114. In this way, an occupied area is reduced, miniaturization of the on-board power supply 10 is facilitated, a space utilization rate of the vehicle 100 can be increased, costs required for the additional fixation structure can be further reduced, and heat generated by the first transformer 112, the PFC inductor 113, and the second transformer 114 can be conveniently collected, thereby improving a thermal management capability of the vehicle 100.

Optionally, the position of the on-board power supply 10 is not limited by the description of FIG. 6. To be specific, the on-board power supply 10 may be arranged at a bottom of a trunk of the vehicle 100, or may be arranged under rear seats of the vehicle 100.

In the descriptions of the specification, descriptions with reference to terms such as "some specific implementations", "an implementation", "some implementations", "an exemplary implementation", "an example", "a specific example", or "some examples" mean that specific features, structures, materials, or characteristics described based on implementations or examples are included in at least one implementation or example of the present disclosure. In the specification, schematic descriptions of the above terms do not necessarily refer to the same implementation or example. In addition, the described specific features, structures, materials, or characteristics may be combined in a proper manner in any one or more implementations or examples.

In addition, the terms "first" and "second" are merely used for the purpose of description, and cannot be construed as indicating or implying relative importance or implicitly indicating a quantity of the indicated technical features. Therefore, features defined with "first" and "second" may explicitly or implicitly include at least one of the features. In the descriptions of the present disclosure, "multiple" means at least two, for example, two or three, unless otherwise explicitly and specifically defined.

Although the embodiments of the present disclosure have been shown and described above, it may be understood that the above embodiments are exemplary and cannot be construed as a limitation on the present disclosure. A person of ordinary skill in the art may make changes, modifications, substitutions, or variations to the above embodiments within the scope of the appended claims.

## Claims

1. A charging module (11), comprising a substrate (111), a first transformer (112), a power factor correction, PFC, inductor (113), and a second transformer (114), the first transformer (112), the PFC inductor, and the second transformer (114) being fixed to the substrate (111),
**characterized in that** the first transformer (112), the PFC inductor (113), and the second transformer (114) each comprises first pins (115); through holes (1113) are formed on the substrate (111); the charging module (11) further comprises second pins (117); the second pins (117) are arranged on a side of the substrate (111) opposite to the first transformer (112), the PFC inductor (113), and the second transformer (114); and at least a portion of the first pins (115) extends through the through holes (1113) and is connected to the second pins (117).

2. The charging module (11) according to claim 1, wherein limiting grooves (1111) are formed on the substrate (111); and the first transformer (112), the PFC inductor (113), and the second transformer (114) are arranged in the limiting grooves (1111).

3. The charging module (11) according to claim 1, wherein the first transformer (112), the PFC inductor (113), and the second transformer (114) are fixed to the substrate (111) by dispensing an adhesive.

4. The charging module (11) according to claim 1, wherein the charging module (11) further comprises a pin adapter board (116); the pin adapter board (116) is arranged on the side of the substrate (111) opposite to the first transformer (112), the PFC inductor (113), and the second transformer (114); the pin adapter board (116) is connected with at least a portion of the second pins (117); and at least a portion of the first pins (115) is connected to the pin adapter board (116) through the through holes (1113).

5. The charging module (11) according to claim 4, wherein the charging module (11) comprises a magnetic sheet (118); the substrate (111) is arranged between the magnetic sheet (118) and the first transformer (112), the PFC inductor (113), and the second transformer; and the first transformer (112) is thermally coupled to the magnetic sheet (118) through the pin adapter board (116).

6. The charging module (11) according to claim 5, wherein a fixing slot (1112) is formed on the substrate (111); and the magnetic sheet (118) is located in the fixing slot (1112).

7. The charging module (11) according to claim 5, wherein the charging module (11) comprises a thermally conductive member; and the thermally conductive member is arranged between the substrate (111) and the magnetic sheet (118).

8. The charging module (11) according to any of claims 1 to 7, wherein the first transformer (112), the PFC inductor (113), and the second transformer (114) are fixed to a same side of the substrate (111); the charging module (11) comprises a housing (119); an accommodating cavity (1191) is formed on the housing (119); and when the substrate (111) is connected to the housing (119), the first transformer (112), the PFC inductor (113), and the second transformer (114) are placed in the accommodating cavity (1191).

9. An on-board power supply (10), comprising the charging module (11) according to any of claims 1 to 8.

10. A vehicle (100), comprising the on-board power supply (10) according to claim 9.

## Patentansprüche

1. Lademodul (11), das ein Substrat (111), einen ersten Transformator (112), eine Leistungsfaktorkorrekturdrosselm, PFC-Drossel (113), und einen zweiten Transformator (114) umfasst, wobei der erste Transformator (112), die PFC-Drossel und der zweite Transformator (114) an dem Substrat (111) befestigt sind, **dadurch gekennzeichnet, dass** der erste Transformator (112), die PFC-Drossel (113) und der zweite Transformator (114) jeweils erste Anschlussstifte (115) umfassen; Durchgangslöcher (1113) in dem Substrat (111) gebildet sind; das Lademodul (11) ferner zweite Anschlussstifte (117) umfasst; die zweiten Anschlussstifte (117) auf einer dem ersten Transformator (112), der PFC-Drossel (113) und dem zweiten Transformator (114) entgegengesetzten Seite des Substrats (111) eingerichtet sind; und sich mindestens ein Teil der ersten Anschlussstifte (115) durch die Durchgangslöcher (1113) erstreckt und mit den zweiten Anschlussstiften (117) verbunden ist.

2. Lademodul (11) nach Anspruch 1, wobei Begrenzungsnuten (1111) auf dem Substrat (111) gebildet sind; und der erste Transformator (112), die PFC-Drossel (113) und der zweite Transformator (114) in den Begrenzungsnuten (1111) eingerichtet sind.

3. Lademodul (11) nach Anspruch 1, wobei der erste Transformator (112), die PFC-Drossel (113) und der zweite Transformator (114) an dem Substrat (111) durch Abgeben eines Klebstoffs befestigt sind.

4. Lademodul (11) nach Anspruch 1, wobei das Lademodul (11) ferner eine Anschlussstift-Adapterplatine (116) umfasst; die Anschlussstift-Adapterplatine (116) auf der dem ersten Transformator (112), der PFC-Drossel (113) und dem zweiten Transformator (114) entgegengesetzten Seite des Substrats (111) eingerichtet ist; die Anschlussstift-Adapterplatine (116) mit mindestens einem Teil der zweiten Anschlussstifte (117) verbunden ist; und mindestens ein Teil der ersten Anschlussstifte (115) durch die Durchgangslöcher (1113) mit der Anschlussstift-Adapterplatine (116) verbunden ist.

5. Lademodul (11) nach Anspruch 4, wobei das Lademodul (11) ein Magnetblech (118) umfasst; das Substrat (111) zwischen dem Magnetblech (118) und dem ersten Transformator (112), der PFC-Drossel (113) und dem zweiten Transformator eingerichtet ist; und der erste Transformator (112) durch die Anschlussstift-Adapterplatine (116) thermisch an das Magnetblech (118) gekoppelt ist.

6. Lademodul (11) nach Anspruch 5, wobei ein Befestigungsschlitz (1112) auf dem Substrat (111) gebildet ist; und sich das Magnetblech (118) in dem Befestigungsschlitz (1112) befindet.

7. Lademodul (11) nach Anspruch 5, wobei das Lademodul (11) ein wärmeleitfähiges Element umfasst; und das wärmeleitfähige Element zwischen dem Substrat (111) und dem Magnetblech (118) eingerichtet ist.

8. Lademodul (11) nach einem der Ansprüche 1 bis 7, wobei der erste Transformator (112), die PFC-Drossel (113) und der zweite Transformator (114) an derselben Seite des Substrats (111) befestigt sind; das Lademodul (11) ein Gehäuse (119) umfasst; ein Aufnahmehohlraum (1191) auf dem Gehäuse (119) gebildet ist; und wenn das Substrat (111) mit dem Gehäuse (119) verbunden ist, der erste Transformator (112),die PFC-Drossel (113) und der zweite Transformator (114) in dem Aufnahmehohlraum (1191) platziert sind.

9. Bordeigene Stromversorgung (10), die das Lademodul (11) nach einem der Ansprüche 1 bis 8 umfasst.

10. Fahrzeug (100), das die bordeigene Stromversorgung (10) nach Anspruch 9 umfasst.

## Revendications

1. Module de charge (11), comprenant un substrat (111), un premier transformateur (112), une inductance de correction du facteur de puissance, PFC, (113), et un second transformateur (114), le premier transformateur (112), l'inductance PFC et le second transformateur (114) étant fixés au substrat (111), **caractérisé en ce que** le premier transformateur (112), l'inductance PFC (113), et le second transformateur (114) comprennent chacun des premières broches (115) ; des trous traversants (1113) sont formés sur le substrat (111) ; le module de charge (11) comprend en outre de secondes broches (117) ; les secondes broches (117) sont disposées sur un côté du substrat (111) opposé au premier transformateur (112), à l'inductance PFC (113), et au second transformateur (114) ; et au moins une partie des premières broches (115) s'étend à travers les trous traversants (1113) et est reliée aux secondes broches (117).

2. Module de charge (11) selon la revendication 1, dans lequel des rainures de limitation (1111) sont formées sur le substrat (111) ; et le premier transformateur (112), l'inductance PFC (113), et le second transformateur (114) sont disposés dans les rainures de limitation (1111).

3. Module de charge (11) selon la revendication 1, dans lequel le premier transformateur (112), l'inductance PFC (113), et le second transformateur (114) sont fixés au substrat (111) par application d'un adhésif.

4. Module de charge (11) selon la revendication 1, dans lequel le module de charge (11) comprend en outre une carte d'adaptation à broches (116) ; la carte d'adaptation à broches (116) est disposée sur le côté du substrat (111) opposé au premier transformateur (112), à l'inductance PFC (113), et au second transformateur (114) ; la carte d'adaptation à broches (116) est reliée à au moins une partie des secondes broches (117) ; et au moins une partie des premières broches (115) est reliée à la carte d'adaptation à broches (116) par l'intermédiaire des trous traversants (1113).

5. Module de charge (11) selon la revendication 4, dans lequel le module de charge (11) comprend une feuille magnétique (118) ; le substrat (111) est disposé entre la feuille magnétique (118) et le premier transformateur (112), l'inductance PFC (113), et le second transformateur ; et le premier transformateur (112) est accouplé thermiquement à la feuille magnétique (118) par l'intermédiaire de la carte d'adaptation à broches (116).

6. Module de charge (11) selon la revendication 5, dans lequel une fente de fixation (1112) est formée sur le substrat (111) ; et la feuille magnétique (118) est placée dans la fente de fixation (1112).

7. Module de charge (11) selon la revendication 5, dans lequel le module de charge (11) comprend un élément thermoconducteur ; et l'élément thermoconducteur est disposé entre le substrat (111) et la feuille magnétique (118).

8. Module de charge (11) selon l'une quelconque des revendications 1 à 7, dans lequel le premier transformateur (112), l'inductance PFC (113), et le second transformateur (114) sont fixés à un même côté du substrat (111) ; le module de charge (11) comprend un boîtier (119) ; une cavité de logement (1191) est formée sur le boîtier (119) ; et lorsque le substrat (111) est relié au boîtier (119), le premier transformateur (112), l'inductance PFC (113), et le second transformateur (114) sont placés dans la cavité de logement (1191).

9. Alimentation électrique embarquée (10), comprenant le module de charge (11) selon l'une quelconque des revendications 1 à 8.

10. Véhicule (100) comprenant l'alimentation électrique embarquée (10) selon la revendication 9.
